# EUROPEAN PATENT SPECIFICATION

(11) **EP 2 235 366 B1**
(45) Date of publication and mention of the grant of the patent: **21.09.2011**
(21) Application number: 08865522.0
(22) Date of filing: 19.12.2008
(51) Int. Cl.: F03D 7/02, F03D 1/06

(54) **ACTIVE FLOW CONTROL DEVICE AND METHOD FOR AFFECTING A FLUID BOUNDARY LAYER OF A WIND TURBINE BLADE**
AKTIVE STRÖMUNGSSTEUERVORRICHTUNG UND VERFAHREN ZUM BEWIRKEN EINER FLUIDGRENZSCHICHT EINER WINDTURBINENSCHAUFEL
DISPOSITIF DE CONTRÔLE DE FLUX ACTIF ET PROCÉDÉ POUR AFFECTER UNE COUCHE LIMITE DE FLUIDE D'UNE PALE D'ÉOLIENNE

(30) Priority: 21.12.2007 DK 200701845
(43) Date of publication of application: 06.10.2010
(73) Proprietor: Vestas Wind Systems A/S, 8940 Randers SV (DK)
(72) Inventor: ABDALLAH, Imad, DK-8900 Randers (DK); GODSK, Kristian, Balschmidt, DK-2200 Kobenhavn N (DK); NIELSEN, Thomas, S., Bjertrup, DK-8900 Randers (DK); NIELSEN, Niels, Christian, M., DK-6971 Spald (DK)
(74) Representative: Ekström, Nils
(86) International application number: PCT/EP2008/010938
(87) International publication number: WO 2009/080316

(56) References cited:
- EP-A1- 1 772 623
- WO-A1-01/16482
- WO-A1-02/29247
- WO-A1-2004/099608
- WO-A1-2007/140771
- FR-A1- 2 863 320
- US-A- 5 570 859
- NICKERSON J D JR: "STUDY OF VORTEX GENERATORS AT LOW REYNOLDS NUMBERS" AIAA PAPER, AMERICAN INSTITUTE OF AERONAUTICS AND ASTRONAUTICS, US, 1 January 1986 (1986-01-01), pages 1-9, XP008079805 ISSN: 0146-3705

## Description

### Technical field

The technical field of the present inventive concept is active control of fluid boundary layer dynamics of wind turbine blades.

More specifically, the present inventive concept relates to an active flow control device and a method for affecting a fluid boundary layer of a wind turbine blade. The inventive concept also relates to a stand-alone module including a plurality of such active flow control devices, as well as to a wind turbine blade comprising a plurality of such active devices or a plurality of such modules.

### Technical background

It is known , see e.g. WO 2007/140771, to improve the performance of wind turbines by using vortex generators on the turbine blades. Vortex generators serve to pull faster flowing air from the free air stream into the boundary layer so as to avoid flow separation and premature stall by providing a strong, turbulent boundary layer.

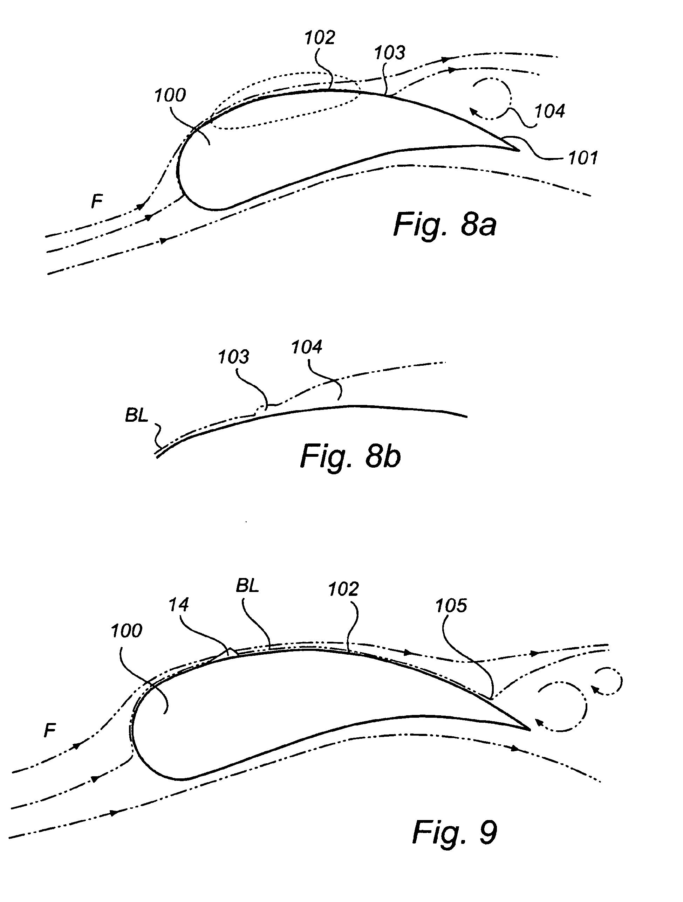

The flow is called "attached" when it flows over the surface from the leading edge to the trailing edge (see Fig. 8a). However, when the angle of attack exceeds a certain critical angle, the flow does not reach the trailing edge, but leaves the blade surface at a separation line (Figs 8a and 8b). Beyond this line, the flow direction is reversed, i.e. it flows from the trailing edge backward to the separation line. Stall dramatically reduces the lift of the blade, and hence the power produced by the wind turbine, and thereby the economy of the wind turbine.

In the most simple form, the vortex generators are a number of small fins arranged adjacent the leading edge of the blade and extending perpendicularly out from the blade while forming an angle with the flow direction of the wind across the blade and thereby generating vortices.

By arranging the fins at alternate positive and negative angles in relation to the flow direction, counter-rotating vortices along the blade profile are generated. As a result, more energy is supplied to the boundary layer of the blade, thereby increasing the wind speed at which the air stream around the blade profile leaves the surface of the blade and the blade stalls.

However, the use of vortex generators also results in an increase of the aerodynamic drag of the blade.

WO 99/50141 discloses a flow effector which is deployable into and retractable out of a wing surface in order to affect a fluid boundary layer on the wing. The flow effector is shown as a plurality of paired oppositely inclined vortex generators for generating counter-rotating vortices. The document relates to flow control for military aircrafts. WO 2004/099608 describes a wind turbine blade with flaps at the front and at the trailing edge which are controlled to regulate lift.

A general object is to provide an enhanced control of the fluid boundary dynamics at a flow surface of a wind turbine blade. This and further objects will be described further below.

### Summary of the invention

In accordance with a first aspect, there is provided a flow control device for use with a wind turbine generator blade, said device comprising one or more flow effectors for affecting a fluid boundary layer at said blade, wherein said one or more flow effectors are rotatable back and forth in an oscillating movement in a rotational plane. The rotatable back and forth oscillating movement of the one or more flow effectors provides for a highly effective attachment of the flow over the blade during operation of the wind turbine due to an efficient vortex formation by the oscillating flow effectors.

The one or more flow effectors may also be movable in a direction transverse to said rotational plane between a retracted position and an extended position. Thus, when the action of the one or more flow effectors are not required they can be retracted and flush with the surface of the blade. When the action of the flow effectors are required they can be extended from the surface of the blade and affect the flow over the blade and thereby improve the attachment of the flow.

In their fully or partly extended position, said one or more flow effectors will affect the fluid boundary layer. In their retracted position, said one or more flow effectors are preferably at least flush with the wind turbine blade, i.e. in their maximum retracted position they are preferably not protruding out into the fluid boundary layer.

Said one or more flow effectors of the flow control device may comprise one or more vortex generators. In a preferred embodiment, each device comprises a pair of vortex generators arranged to create counter-rotating vortices. The paired vortex generators would typically be oppositely inclined forming a V structure, either open or closed towards the incoming air flow. These generated vortices may counter-rotate in relation to each other along the blade profile and supply energy to the boundary layer at the surface of the blade, whereby the wind speed at which the air stream leaves the surface and the blade stalls is increased.

It may also be possible to have only one single vortex generator in each flow control device and also to arrange single-vortex flow control devices in pairs in order to generate counter-rotating vortices.

The provision of active flow effectors that are both rotatable back and forth in an oscillating movement in a rotational plane as well as extendable/retractable in a direction transverse to the rotational plane, results in an active flow control device having two degrees of freedom. In a preferred embodiment, the flow effectors extend essentially perpendicular to the rotational plane.

Without any restriction of the claimed scope, in the following description the extension/retraction movement will be referred to as "the vertical movement", whereas the rotation back and forth will be referred to as "the horizontal oscillation".

The inventive concept offers the possibility to control the vertical extension at various frequencies and amplitudes, as well as to control the frequency and amplitude of the horizontal oscillation. Thereby, a substantial and controlled increase in cross stream mixing (i.e. spanwise) may be accomplished, leading to an efficient stall suppression in adverse pressure gradients. At the same time, at lower angles of attack and/or during transport the flow effectors may be completely or partly retracted in order to decrease drag and noise and avoid damaging them, respectively.

The inventive concept of providing the possibility of horizontal oscillation of the flow effectors also makes it possible to generate an increased cross stream mixing by directing the flow to the area of interest on the blade. This offers i.a. the advantage that flow control devices may not be required over the whole span of the blade.

The flow control device may comprise a housing or frame which hingedly supports said one or more flow effectors and which housing is adapted to be rotated back and forth in order to accomplish the horizontal oscillation.

The flow control device may comprise a first drive means for accomplishing the vertical movement, i.e. for moving said one or more flow effectors between said extended position and said retracted position. For control purposes, said first drive means may be arranged to position said one or more flow effectors in any selected position between said extended position and said retracted position. In the retracted position, the flow enhancer devices are preferably fully flush with the blade surface. Such first drive means may preferably be arranged inside the above-mentioned housing.

In order to even further increase the mixing of high energy air from the freestreem to replace the boundary layer air, the flow control device may further comprise vibration drive means for generating a vibration of said one or more flow effectors. The direction of vibration may be transverse to the rotational plane, and may especially coincide with the direction in which said one or more flow effectors are deployed and retracted.

The above-mentioned first drive means for generating the vertical deployment movement may be used also for generating the vibration, whereby the vibration will be superimposed on the vertical deployment movement.

In accordance with a second aspect, there is provided a flow control module comprising a supporting body which is adapted to be mounted in a wind turbine blade and which supports a plurality of flow control devices. The flow control devices may be arranged in a linear distributed manner in the module, or in some other suitable configuration.

For enabling the oscillating movement of the module's flow effectors, these may be rotatably supported by the body of the module.

The flow control devices of the module may be drivingly interconnected into one or more groups, whereby the oscillating movement is common to all flow effectors in each group.

According to a further aspect, there is provided a method for affecting a fluid boundary layer at a flow surface of a wind turbine blade, comprising:
the step of controlling a deployment/retraction degree of one or more flow effectors which are deployable into and retractable out from said fluid boundary layer, and
the step of controlling a rotation of said one or more flow effectors, when these are at least partly deployed into the fluid boundary layer, back and forth in an oscillating movement in a rotational plane essentially parallel to said flow surface.

In a preferred embodiment, said method further comprises the step of also controlling a vibration of said flow effectors, especially a vibration transverse to the flow surface of the blade. Such a vibration will effectively contribute to an enhanced mixing. The vibration frequency range will depend on each installation and on actual operation conditions. However, a possible vibration frequency range may be 40-70 Hz, which may be increased temporarily to say 90-100 Hz if an immediate stall risk is detected.

In embodiments where vibration is used, vibration may be activated as a "final" stall-preventing measure to increase mixing. For instance, the following sequence of control modes may be employed:
Mode I. For low angles of attack, the flow effectors may be fully retracted (flush with the blade), in order to reduce drag.
Mode II. As the angle of attack increases, the flow effectors are gradually deployed into the boundary layer in order to increase mixing thereof.
Mode III. As the angle of attack increase further and the blade reaches the onset of stall, the flow effectors are activated (vibration initiated) in order to further increase mixing.

The horizontal oscillating movement of the flow effectors may be activated in Mode 2 and/or in Mode III.

These control modes are preferably regulated by the use of one or more sensors for detecting the magnitude of the angle of attack or any other relevant flow control parameter.

In order to obtain a most effective and efficient operation, the height of the flow effectors above the blade surface is preferably actively and continuously controlled to be adapted to the local boundary layer thickness, which in turn is dependent on the Reynolds number. The Reynolds number is not the same over the span of the blade nor as a function of the wind speed. Consequently, various height levels or deployment degrees may be used actively over the span of the blade depending on the local operating Reynolds number. The degree of vertical extension may be different along the span of the blade. For instance, it may be preferable to have a larger extension at the root of the blade.

Therefore, one control parameter for actively controlling the deployment degree may relate to the local boundary layer thickness or the local Reynolds number and pressure distribution.

The input control parameters in each case would be dependent on the control objectives, which could be numerous in the present case. Possible local control parameters include one or more of the following:
- Pressure distribution on several cross sections along the span of the blade
- Inflow angle/angle of attack
- Re number
- Boundary layer thickness
- Local wind speed measurements and/or wind direction measurements

More global input parameters may relate to load:
- Blade tip displacement
- Flapwise Root moment

Furthermore, it may also be possible to actively control the flow effectors up and down during a complete revolution of the wind turbine due to the fact that the wind speed is lower at the ground level, or because of a sudden gust, yaw misalignment, aerodynamic load imbalance, etc.

Measuring the pressure on the surface a wind turbine blade may be one way of establishing local control parameters. The measuring itself may be performed by use of pressure sensors located in the surface of the wind turbine blade. The pressure may be measured locally and activate the flow effectors locally. However, the flow effectors may be located all over the span of the wind turbine blade i.e. from the root and to the tip, and from the leading edge to the trailing edge. Naturally, the pressure sensors may also be located all over the span of the wind turbine blade.

A specific use of the inventive flow control device is to locate one or more of these at the tip of a wind turbine blade in order to modify and dissipate the geometry of the blade tip vortex.

The active flow control device(s) would act as:
1. Virtual winglet
2. Tip/wake vortex dissipater

Acting as blade tip/wake vortex dissipater, the active flow control devices modify the near field wake topology to distribute circulation over an increased area and reduce the consequence of wake loading on a downstream turbine. This is mainly interesting when the turbine operates in large wind parks, such as offshore parks. Acting as a virtual winglet /wake vortex dissipater, the active flow control devices will act to suppress tip vortex induced noise.

Nowadays, noise regulation is performed by derating (reducing the RPM) the turbine and pitching less aggressive. However, by doing so, the power output of the turbine is reduced. In order to counter this effect, the active flow control devices could be used to control/mask the noise emitted by the blade.

Another specific use of the inventive flow control device is to locate one or more of these at the root of a wind turbine blade in order to suppress 3D and stalled flow at the root.

A wind turbine blade does not have the same aerodynamic efficiency along its entire length. Specific design considerations apply at the root of the blade to allow the blade to bear its own weight and to allow the blade to be mounted on the turbine. These design factors have a negative effect on the blade's performance.

The above-described inventive aspects offer a number of advantages:
1. At low speeds, a wind turbine blade may operate with a smooth blade profile (reduced drag), whereas the flow effectors can be gradually deployed in an regulated manner at higher wind speeds when they are needed.
2. No drag penalty at low angles of attack (unlike prior-art fixed vortex generators)
3. No noise penalty at low wind speeds (unlike prior-art fixed vortex generators)
4. Due to an increased air mixing at the boundary layer, maximum lift is potentially higher than on prior-art vortex generators.
5. Due to the increased number of degrees of freedom - deployment/retraction and oscillation and (optionally) vibration - it becomes possible to actively and continuously regulate the effect on the fluid boundary surface in a very efficient manner.
6. A possibility to use the inventive concept near the tip and/or the root of a wind turbine blade in order to eliminate negative flow dynamic conditions specific to these locations.

### Description of embodiments of the inventive concept

The inventive concept and further advantages will now be described by way of a non-limiting embodiment, with reference to the accompanying drawings.
Fig. 1 is a perspective view of a flow control device in accordance with an embodiment of the inventive concept.
Fig. 2 is a perspective view of a wind turbine blade provided with a plurality of flow control devices arranged in modules.
Fig. 3 is a perspective view of a schematic, simplified drive mechanism for oscillation of a plurality of flow control devices.
Fig. 4 is a schematic perspective view of an embodiment of a flow control module provided with a plurality of flow control devices.
Fig. 5 is a perspective view of a wind turbine blade provided with a flow control module and different sensors.
Fig. 6 is a top view of the flow control module in Fig. 5.
Fig. 7 is a cross sectional view of a module mounted in a wind turbine blade.
Fig. 8a is a schematic illustration of a first condition of a fluid boundary layer at a wind turbine blade.
Fig. 8b is an enlarged view of the marked section in Fig. 8a.
Fig. 9 is a schematic illustration of a second condition of a fluid boundary layer at a wind turbine blade.

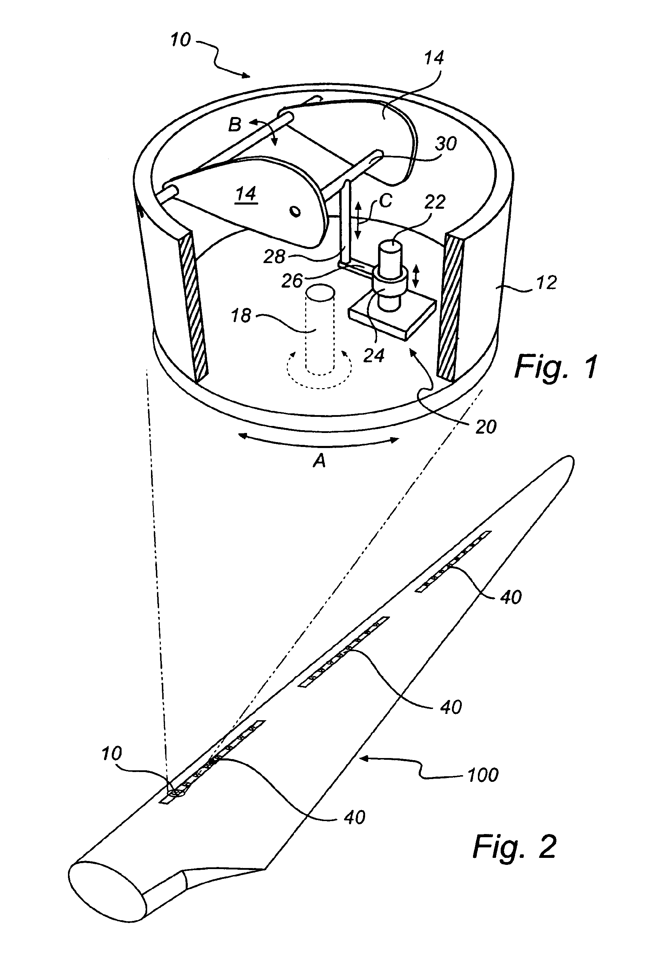

Fig. 1 schematically illustrates an embodiment of an active flow control device 10 to be mounted in a blade 100 (Fig. 2) of a wind turbine (not shown). The active flow control device 10 comprises a frame or housing 12 (formed by a cylindrical wall and bottom) and a pair of fin-shaped flow effectors 14 hingedly supported at their tip end in the housing 12 by a pivot 16.

The flow effectors 14 are used to control fluid boundary layer dynamics, in order to counteract and control air boundary layer separation and in order to provide a general beneficial operation of the flow surface of the blade. The flow effectors 14 may also be used for specific purposes at the tip and/or at the root of the blade.

Fig. 8a schematically illustrates an air flow F flowing towards a wind turbine blade 100 and over the blade surface 102 forming a boundary layer BL. In the situation in Fig. 8a, and as viewed in larger scale in Fig. 8b, the flow F does not reach the trailing edge 101 of the blade 100. The boundary layer BL separates from the blade surface 102 at a separation line or transition region 103. Beyond this region 103, the flow direction is reversed at 104 forming a turbulent boundary layer.

Fig. 9 schematically illustrates how the use of the flow effectors 14 may affect the boundary layer dynamics so that the separation is substantially deferred, as indicated at 105.

In the shown embodiment, the flow effectors 14 are in the form of two oppositely angled counter-rotating vortex generators 14. During the operation of the wind turbine blade 100, the lateral surfaces of the vortex generators 14 generate vortices which counter-rotate in relation to each other along the blade profile and supplies energy to the boundary layer at the surface of the blade, whereby the wind speed at which the air stream leaves the surface and the blade stalls may be increased. More specifically, the generated vortex structures mix high energy air from the freestreem to replace the boundary layer fluid that has lost kinetic energy as a result of interaction with the surface. Thus, by energizing the boundary surface layer, the flow effectors may suppress stall.

The housing 12 is arranged to be rotated back and forth in an oscillating movement, as indicated by arrow A, by the rotation of a spindle 18 forming a rotational axis. When mounted to the blade 100 and during operation, the housing 12 and the flow effectors 14 supported therein are arranged to rotate back and forth in a geometrical rotational plane. This rotational plane may be essential parallel to a blade surface 102. In the following, this movement will be referred to as "the horizontal oscillation"

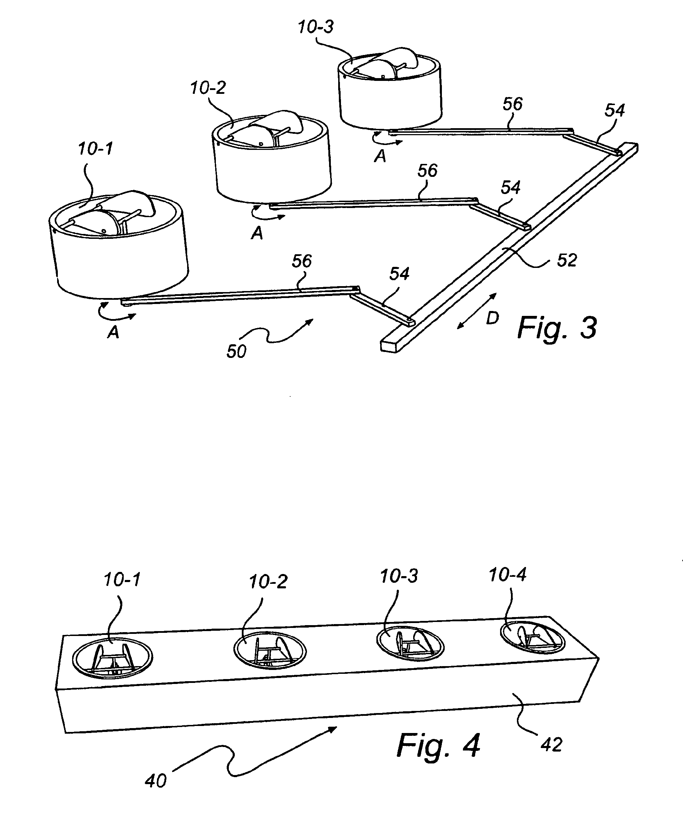

Drive means for generating the horizontal oscillation (A) may be integrated with the device 10 or, as in the illustrated embodiment in Fig. 3, be provided as a common drive means 50 for simultaneous control of a plurality of flow control devices 10-1, 10-2, 10-3 in the form of a push-pull rod mechanism. A linear movement back and forth (arrow D) of a common translational rod 52 is transferred by linkage arms 54 to arms 56 fixedly connected to the spindles 18 of the flow control devices 10-1, 10-2 and 10-3, in order to oscillate the flow effectors 14 with a suitable and, preferably, regulated frequency and amplitude. The linear movement of the rod 52 is generated by any suitable drive means.

A drive means 20 is arranged inside the housing 12 in order to move the vortex generators 14 in a pivot movement about pivot 16 between one the one hand a deployed position and, on the other hand, a retracted position, as indicated by an arrow B. This movement is in the following referred to as the vertical deployment movement and is directed transversely to the rotational plane.

In the illustrated embodiment, the drive means 20 for the vertical movement is in the form of a piezoelectric linear motor 20 comprising a piezoelectric stack 22 supported by the housing 12 and a slider 24 linearly movable along the stack 22 to any selected vertical position between a fully retracted position and a fully extended or deployed position. The linear drive movement of the slider 24 is transferred by connecting rods 26, 28 and 30 into a pivot movement (B) of the two flow effectors 14 for continuously adjusting the extent of deployment/retraction thereof.

In a preferred embodiment and in order to further increase the air mixing effect, the vortex generators 14 are also arranged to vibrate as indicated by arrow C in Fig. 1. The vibration is preferably generated in a direction transverse, e.g. perpendicular, to the rotational plane. In the described embodiment, the vibration is also generated by a vertical movement at pivot 16, whereby the drive means 20 may be used for double purposes and the vibration is superimposed on the vertical deployment/retraction movement. The vibration may be activated at different deployment degrees and should preferably be actively controlled with a suitable frequency and amplitude.

As mentioned above, the flow control devices 10 are adapted to be mounted in a wind turbine blade 100. This could of course be performed by mounting the devices 10 one by one in the blade surface 102. However, in a preferred embodiment as the one illustrated in the figures, the flow control devices 10 are initially assembled or integrated in stacks forming stand-alone modules 40 (Fig. 4), which are subsequently mounted in the blade 100. The flow control devices 10 could be mounted at the time of manufacture, or retrofitted to existing blades at any time.

Fig. 4 is a perspective view of such a stand-alone module 40 having four flow control devices 10-1 to 10-4 linearly arranged in spaced relationship. The module 40 comprises a box-shaped elongate supporting body 42 in which a plurality of flow control devices 10 are rotatably received (four devices are shown as a non-limiting example).

As indicated in Fig. 2, such modules 40 may be installed at different locations along the span of the blade 100. In addition, a number of individual devices 10 may also be arranged in the blade.

In the embodiment shown, the modules 40 are mounted in the blade skin 107 by means of plugs 108. Rectangular slots 110 may be provided (e.g. drilled) through the blade shell 107. These slots 110 are then lined with the insertable plugs 108. The plugs 108 could be molded from a suitable thermoplastic or thermosetting material. The material is preferably UV stable and able to withstand sub-zero temperatures. ABS plastic or Nylon may be suitable options.

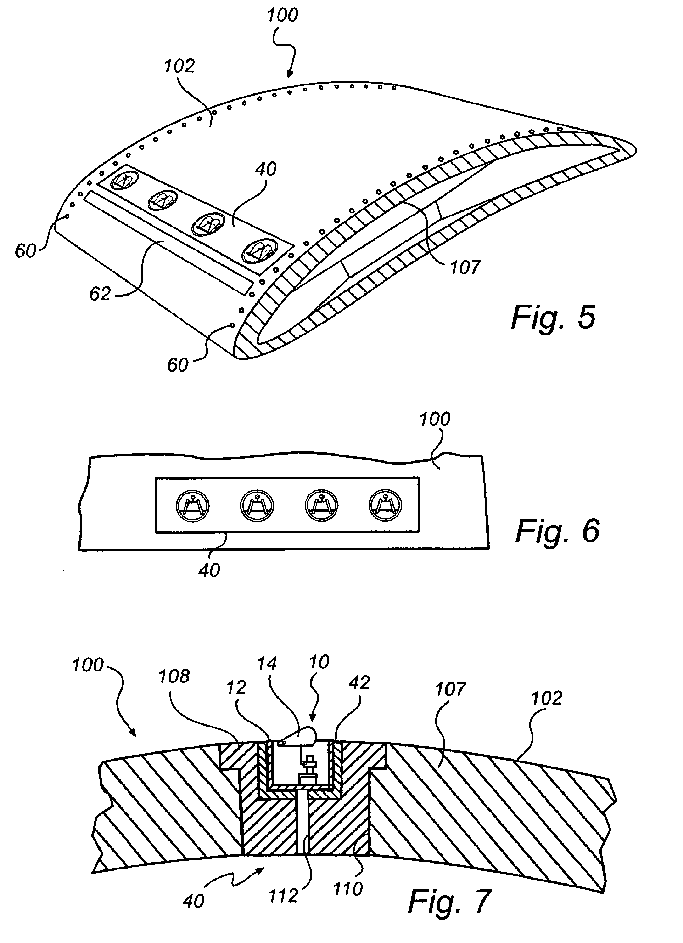

Thereafter, the modules 40 carrying the devices 10 are inserted (by e.g. resin/glue) into the plugs 108 as illustrated in Fig. 7. Due to the drilling of the slots 110 some redesign of the blade structure may be required for stability purposes.

The plug 108 may present one or more bores or slots 112 for receiving the spindles 18 of the devices 10, and optionally also for receiving electrical wiring (not shown) to the drive means 20.

As indicated in Fig. 3, the flow control devices 1-10 to 10-3 of a module 40 may be drivingly interconnected into one or more groups, whereby the horizontal oscillation is common to all flow effectors in each group.

Fig. 5 illustrates schematically two types of sensors that may be used for generating control inputs for the active control of the different movements (vertical deployment, horizontal oscillation, vertical vibration). These sensors include (i) pressure taps 60 for measuring the magnitude of the angle of attack among other flow properties, and (ii) a shear sensor 62 for detecting the state of the boundary layer or any other flow sensor.

The illustrated and described embodiment may be modified in many ways within the claimed scope.

The flow effectors 14 may be shaped and designed differently, e.g. as co-rotating vortex generators, turbulence producers, etc. The shape could be rectangular, triangular, a semi-circle, etc, and the pivot point may be located differently.

The flow effectors 14 may be extended/retracted in a linear movement, instead of a pivotal movement, or a combination thereof.

Each flow control device 10 may have only one flow effector 14 or more than two flow effectors 14.

The deployment drive means 20 may be replaced by other drive means, such as pneumatic, hydraulic or electrical drive means. Alternatively, the drive force for the vertical deployment movement may be transferred from another position in the blade, via a link mechanism or the like.

The vertical vibration may alternatively be generated by a vibration drive means arranged separately from the drive means 20 that deploys and retracts the vortex generators 14.

Additional vibration may be added in order to further increase the effect. For instance, a horizontal vibration of the vortex generators 14 may be superimposed on the horizontal oscillation movement, or a vibration may be provided along the rod 30 interconnecting the two flow effectors 14.

## Claims

1. A flow control device (10) for use with a wind turbine generator blade (100), said device comprising one or more flow effectors for affecting a fluid boundary layer (BL) at a flow surface (102) of said blade, **characterised in that** said one or more flow effectors (14) are rotatable back and forth in an oscillating movement (A) in a rotational plane essentially parallel to said flow surface (102) by a drive means.

2. A flow control device (10) as claimed in claim 1, wherein said one or more flow effectors (14) are movable in a direction transverse to said rotational plane between a retracted position and an extended position.

3. A flow control device (10) as claimed in claim 1 or 2, wherein said one or more flow effectors (14) comprises one or more vortex generators.

4. A flow control device (10) as claimed in claim 3, wherein said one or more vortex generators comprises a pair of vortex generators (14) arranged to create counter-rotating vortices.

5. A flow control device (10) as claimed in any of the preceding claims, further comprising a housing (12) which hingedly supports said one or more flow effectors (14) and which housing (12) is adapted to be rotated back and forth in order to accomplish said oscillating movement (A).

6. A flow control device (10) as claimed in any of the preceding claims 2-5, further comprising a drive means (20) for moving said one or more flow effectors (14) between said extended position and said retracted position.

7. A flow control device (10) as claimed in any of the preceding claims, further comprising vibration drive means for generating a vibration (C) of said flow effectors (14).

8. A flow control module (40) comprising:
a supporting body (42), which is adapted to be mounted in a wind turbine blade (100), and
a plurality of flow control devices (10-1, 10-2,..) as claimed in any of the preceding claims, said devices being supported by said supporting body (42).

9. A flow control module (40) as claimed in claim 8, wherein the flow control devices (10-1, 10-2,..) of the module (40) are drivingly interconnected into one or more groups, whereby said oscillating movement (A) is common to all flow effectors (14) in each group.

10. A flow control module (40) as claimed in claim 9, further comprising a common drive means (50), which is operatively connected to said plurality of flow control devices (10-1, 10-2,..) for accomplishing the common oscillating movement (A) of all the flow effectors (14) in the module (40).

11. A wind turbine blade (100), comprising a plurality of flow control devices (10) as claimed in any of claims 1 to 7.

12. A wind turbine blade (100), comprising a plurality of flow control modules (40) according to any of claims 8 to 10.

13. A wind turbine blade (100) as claimed in claim 12, wherein said modules (40) are received in openings (110) provided in a blade surface (102) of the blade.

14. A method for affecting a fluid boundary layer at a flow surface (102) of a wind turbine blade (100), comprising:
the step of controlling a deployment/retraction degree (B) of one or more flow effectors (14) which are deployable into and retractable out from said fluid boundary layer, and
the step of controlling a rotation of said one or more flow effectors (14), when they are at least partly deployed into the fluid boundary layer, back and forth in an oscillating movement (A) in a rotational plane essentially parallel to said flow surface (102)

15. A method as claimed in claim 14, further comprising the step of controlling a vibration (C) of said flow effector (14).

16. A method as claimed in claim 15, wherein the direction of said vibration (C) is transverse to said flow surface (102).

## Patentansprüche

1. Strömungssteuervorrichtung (10) zur Verwendung mit einem Windturbinengeneratorblatt (100), wobei die Vorrichtung einen oder mehrere Strömungsaktoren zum Beeinflussen einer Fluidgrenzschicht (BL) an einer Strömungsoberfläche (102) des Blattes umfasst,
**dadurch gekennzeichnet, dass** der eine oder die mehreren Strömungsaktoren (14) durch ein Antriebsmittel in einer Schwingungsbewegung (A) in einer Drehebene vor und zurück drehbar sind, die im Wesentlichen parallel zur Strömungsoberfläche (102) ist.

2. Strömungssteuervorrichtung (10) nach Anspruch 1, wobei der eine oder die mehreren Strömungsaktoren (14) in einer Richtung transversal zur Drehebene zwischen einer eingefahrene Stellung und einer ausgefahrene Stellung beweglich sind.

3. Strömungssteuervorrichtung (10) nach Anspruch 1 oder 2, wobei der eine oder die mehreren Strömungsaktoren (14) einen oder mehrere Turbolatoren umfassen.

4. Strömungssteuervorrichtung (10) nach Anspruch 3, wobei der eine oder die mehreren Turbolatoren ein Paar Turbolatoren (14) umfassen, die angeordnet sind, sich entgegengesetzt drehende Wirbel zu erzeugen.

5. Strömungssteuervorrichtung (10) nach irgendeinem der vorhergehenden Ansprüche, die ferner ein Gehäuse (12) umfasst, das den einen oder die mehreren Strömungsaktoren (14) schwenkbar hält und wobei das Gehäuse (12) dafür ausgelegt ist, vor und zurück gedreht zu werden, um die Schwingungsbewegung (A) zu erreichen.

6. Strömungssteuervorrichtung (10) nach irgendeinem der vorhergehenden Ansprüche 2-5, die ferner ein Antriebsmittel (20) zum Bewegen des einen oder der mehreren Strömungsaktoren (14) zwischen der ausgefahrenen Stellung und der eingefahrenen Stellung umfasst.

7. Strömungssteuervorrichtung (10) nach irgendeinem der vorhergehenden Ansprüche, die ferner Vibrationsantriebsmittel zum Erzeugen eine Vibration (C) der Strömungsaktoren (14) umfasst.

8. Strömungssteuermodul (40), das Folgendes umfasst:
einen Haltekörper (42), der dafür ausgelegt ist, in einem Windturbinenblatt (100) montiert zu werden, und
mehrere Strömungssteuervorrichtungen (10-1, 10-2, ..) nach irgendeinem der vorhergehenden Ansprüche, wobei die Vorrichtungen durch den Haltekörper (42) gehalten sind.

9. Strömungssteuermodul (40) nach Anspruch 8, wobei die Strömungssteuervorrichtungen (10-1, 10-2, ..) des Moduls (40) in antreibender Weise zu einer oder mehreren Gruppen miteinander verbunden sind, wobei die Schwingungsbewegung (A) allen Strömungsaktoren (14) in jeder Gruppe gemeinsam ist.

10. Strömungssteuermodul (40) nach Anspruch 9, das ferner ein gemeinsames Antriebsmittel (50) umfasst, das wirkend mit den mehreren Strömungssteuervorrichtungen (10-1, 10-2, ..) verbunden ist, um die gemeinsame Schwingungsbewegung (A) all der Strömungsaktoren (14) im Modul (40) zu erreichen.

11. Windturbinenblatt (100), das mehrere Strömungssteuervorrichtungen (10) nach irgendeinem der Ansprüche 1-7 umfasst.

12. Windturbinenblatt (100), das mehrere Strömungssteuermodule (40) nach irgendeinem der Ansprüche 8-10 umfasst.

13. Windturbinenblatt (100) nach Anspruch 12, wobei die Module (40) in Öffnungen (110) aufgenommen sind, die in einer Blattoberfläche (102) des Blattes bereitgestellt sind.

14. Verfahren zum Beeinflussen einer Fluidgrenzschicht an einer Strömungsoberfläche (102) eines Windturbinenblattes (100), das Folgendes umfasst:
den Schritt des Steuerns eines Ausfahr-Einfahr-Maßes (B) eines oder mehrerer Strömungsaktoren (14), die in die Fluidgrenzschicht ausfahrbar und aus dieser heraus einfahrbar sind, und
den Schritt des Steuerns einer Drehung des einen oder der mehreren Strömungsaktoren (14), wenn sie mindestens teilweise in die Fluidgrenzschicht ausgefahren sind, vor und zurück in einer Schwingungsbewegung (A) in einer Drehebene im Wesentlichen parallel zur Strömungsoberfläche (102).

15. Verfahren nach Anspruch 14, das ferner den Schritt des Steuerns einer Vibration (C) des Strömungsaktors (14) umfasst.

16. Verfahren nach Anspruch 15, wobei die Richtung der Vibration (C) transversal zur Strömungsoberfläche (102) ist.

## Revendications

1. Dispositif de contrôle de flux (10) destiné à être utilisé avec une pale de générateur d'éolienne (100), ledit dispositif comprenant un ou plusieurs effecteurs de flux pour affecter une couche limite de fluide (BL) au niveau d'une surface de flux (102) de ladite pale,
**caractérisé en ce que** lesdits un ou plusieurs effecteurs de flux (14) peuvent être tournés en va-et-vient dans un mouvement oscillant (A) dans un plan rotationnel sensiblement parallèle à ladite surface de flux (102) par un moyen d'entraînement.

2. Dispositif de contrôle de flux (10) selon la revendication 1, dans lequel lesdits un ou plusieurs effecteurs de flux (14) peuvent être déplacés dans une direction transversale au dit plan rotationnel entre une position retirée et une position déployée.

3. Dispositif de contrôle de flux (10) selon la revendication 1 ou 2, dans lequel lesdits un ou plusieurs effecteurs de flux (14) comprennent un ou plusieurs générateurs de tourbillon.

4. Dispositif de contrôle de flux (10) selon la revendication 3, dans lequel lesdits un ou plusieurs générateurs de tourbillon comprennent une paire de générateurs de tourbillon (14) agencés pour créer des tourbillons à rotation inverse.

5. Dispositif de contrôle de flux (10) selon l'une quelconque des revendications précédentes, comprenant en outre un boîtier (12) qui supporte par charnière lesdits un ou plusieurs effecteurs de flux (14), et ledit boîtier (12) est apte à être tourné en va-et-vient pour accomplir ledit mouvement oscillant (A).

6. Dispositif de contrôle de flux (10) selon l'une quelconque des revendications 2 à 5 précédentes, comprenant en outre un moyen d'entraînement (20) pour déplacer lesdits un ou plusieurs effecteurs de flux (14) entre ladite position déployée et ladite position retirée.

7. Dispositif de contrôle de flux (10) selon l'une quelconque des revendications précédentes, comprenant en outre un moyen d'entraînement de vibration pour générer une vibration (C) desdits effecteurs de flux (14).

8. Module de contrôle de flux (40) comprenant :
un corps de support (42) qui est apte à être monté dans une pale d'éolienne (100), et
une pluralité de dispositifs de contrôle de flux (10-1,10-2, ...) selon l'une quelconque des revendications précédentes, lesdits dispositifs étant supportés par ledit corps de support (42).

9. Module de contrôle de flux (40) selon la revendication 8, dans lequel les dispositifs de contrôle de flux (10-1, 10-2, ... ) du module (40) sont interconnectés de manière à pouvoir être entraînés dans un ou plusieurs groupes, de telle manière que ledit mouvement oscillant (A) soit commun à tous les effecteurs de flux (14) dans chaque groupe.

10. Module de contrôle de flux (40) selon la revendication 9, comprenant en outre un moyen d'entraînement commun (50), qui est connecté de manière opérationnelle à ladite pluralité de dispositifs de contrôle de flux (10-1, 10-2, ... ) pour accomplir le mouvement oscillant commun (A) de tous les effecteurs de flux (14) dans le module (40).

11. Pale d'éolienne (100), comprenant une pluralité de dispositifs de contrôle de flux (10) selon l'une quelconque des revendications 1 à 7.

12. Pale d'éolienne (100), comprenant une pluralité de modules de contrôle de flux (40) selon l'une quelconque des revendications 8 à 10.

13. Pale d'éolienne (100) selon la revendication 12, dans laquelle lesdits modules (40) sont reçus dans des ouvertures (110) fournies dans une surface de pale (102) de la pale.

14. Procédé destiné à affecter une couche limite de fluide au niveau d'une surface de flux (102) d'une pale d'éolienne (100), comprenant :
l'étape de contrôle d'un degré de déploiement/retrait (B) d'un ou plusieurs effecteurs de flux (14) qui peuvent être déployés dans ladite couche limite de fluide et qui peuvent en être retirés, et
l'étape de contrôle d'une rotation desdits un ou plusieurs effecteurs de flux (14), lorsqu'ils sont au moins partiellement déployés dans la couche limite de fluide, en va-et-vient dans un mouvement oscillant (A) dans un plan rotationnel sensiblement parallèle à ladite surface de flux (102).

15. Procédé selon la revendication 14, comprenant en outre l'étape de contrôle d'une vibration (C) dudit effecteur de flux (14).

16. Procédé selon la revendication 15, dans lequel la direction de ladite vibration (C) est transversale à ladite surface de flux (102).
